# EUROPEAN PATENT APPLICATION

(11) **EP 1 906 037 A2**
(43) Date of publication of application: **02.04.2008**
(21) Application number: 07019081.4
(22) Date of filing: 27.09.2007
(51) Int. Cl.: F16C 19/36, F16C 33/66

(54) **Tapered roller bearing**

(30) Priority: 28.09.2006 JP 2006264325; 28.09.2006 JP 2006264327; 29.09.2006 JP 2006267085
(71) Applicant: JTEKT Corporation, Osaka-shi Osaka 542-8502 (JP)
(72) Inventor: Matsuyama, Hiroki, Osaka-shi Osaka 542-8502 (JP); Toda, Kazutoshi, Osaka-shi Osaka 542-8502 (JP); Uemura, Atsuji, Osaka-shi Osaka 542-8502 (JP)
(74) Representative: Schaeberle, Steffen

(57) **Abstract**

A tapered roller bearing device including an inner ring (2) having an inner ring tapered raceway surface and a large rib portion (11) which is located on a larger diameter side of the inner ring tapered raceway surface; an outer ring (1) having an outer ring tapered raceway surface; a plurality of tapered rollers (3) disposed between the inner ring tapered raceway surface and the outer ring tapered raceway surface; and a projecting portion (5) formed on an outer peripheral surface of the large rib portion (11) so as to project in a radial outer direction of the inner ring (2).

## Description

### BACKGROUND OF THE INVENTION

### 1. Field of the Invention

This invention relates to a tapered roller bearing device. Particularly, the invention relates to a tapered roller bearing device suitably applicable to rotatably support a pinion shaft in a pinion shaft supporting system with the pinion shaft in a vehicle, such as differential gear systems, transaxle systems or transferring systems.

### 2. Related Art

Conventionally, there is known a tapered roller bearing device disclosed in Japanese patent publication No. H11-48805A. The disclosed tapered roller bearing device includes an inner ring, an outer ring and tapered rollers. The inner ring includes a large rib portion on a larger diameter side of its tapered (or conical) raceway surface so as to be brought into contact with larger diameter side end faces of the tapered rollers. An inner peripheral surface of the inner ring is fixed to a pinion shaft of a differential gear system, whereas an outer peripheral surface of the outer ring is fixed to an annular partition wall in the differential gear system.

In the above-described tapered roller bearing device, in order to prevent seizure of the inner ring, outer ring and the tapered rollers, oil supplied through an oil passage from a side of a ring gear in the differential gear system is guided between an inner peripheral surface of the outer ring and an outer peripheral surface of the inner ring. Namely, the oil is supplied from a smaller diameter side opening of the inner ring tapered raceway surface to a larger diameter side opening of the inner ring tapered raceway surface.

Based on the background, in an oil lubrication tapered roller bearing, there is a demand to significantly reduce torque of the bearing by significantly reducing agitation loss of the oil. However, if the oil supplied in the tapered roller bearing device is limited to a minute amount to significantly reduce the oil agitation loss, which is the main factor of the torque of the bearing, there is a fear that the oil would not be sufficiently supplied to a sliding region formed between the large rib portion of the inner ring and the larger diameter side end faces of the tapered rollers and sufficient lubrication in the sliding region would not be obtained.

On the other hand, if the oil is supplied affluently to obtain a reliable lubrication in the sliding region, the torque of the bearing must be increased due to the oil agitation loss, and it is not possible to accomplish significant reduction of the torque of the bearing.

### SUMMARY OF THE INVENTION

The present invention has been made in view of the above circumstances, and an object of the invention is to provide a tapered roller bearing device in which a torque of the bearing is significantly reduced while obtaining a reliable lubrication in a sliding region between a large rib portion and end faces of tapered rollers.

The above object has been achieved by a tapered roller bearing device comprising:
an inner ring having an inner ring tapered raceway surface and a large rib portion which is located on a larger diameter side of the inner ring tapered raceway surface;
an outer ring having an outer ring tapered raceway surface;
a plurality of tapered rollers disposed between the inner ring tapered raceway surface and the outer ring tapered raceway surface; and
a projecting portion formed on an outer peripheral surface of the large rib portion so as to project in a radial outer direction of the inner ring.

The projecting portion may be provided with an extended part extended in an axial direction. Alternatively, the projecting portion may be formed without such an extended portion. Further, the projecting portion may be formed integrally with the inner ring. Alternatively, the projecting portion may be formed separately from the inner ring. Furthermore, the projecting portion may be, or may not be formed into an annular shape.

The inventors have discovered that seizure is caused in the sliding region between the large rib portion and larger diameter side end faces of the tapered rollers in most cases in the tapered roller bearing device having the large rib portion in the inner ring. In other words, the inventors have discovered that the seizure can be prevented entirely in the tapered roller bearing devices, if the seizure caused between the large rib portion of the inner ring and the larger diameter side end faces of the tapered rollers can be prevented.

According to the inventors, since the bearing device has the projecting portion formed on the outer peripheral surface of the large rib portion so as to project in a radial outer direction of the inner ring, the projecting portion can prevent oil (lubrication oil) from flowing away from the bearing device if the oil is supplied to the projecting portion and the larger diameter side end faces of the tapered rollers (more specifically, the oil is supplied between the projecting portion and the larger diameter side end faces of the tapered rollers). According, the oil can be supplied efficiently to the larger diameter side end faces of the tapered rollers as well as a sliding surface on the large rib portion facing the larger diameter side end faces. As a result, a reliable lubrication can be obtained between the large rib portion of the inner ring and the larger diameter side end faces of the tapered rollers, and it is possible to reliably prevent seizure between the sliding surface and the larger diameter side end faces of the tapered rollers which could be caused due to the sliding contact therebetween.

Further, according to the invention, the seizure can be prevented entirely in the tapered roller bearing device by providing the oil supplying unit for supplying the oil to the projecting portion and the larger diameter side end faces of the tapered rollers. Accordingly, the amount of the oil supplied in the tapered roller bearing device is significantly reduced as compared with conventional bearing devices. Therefore, a torque of the tapered roller bearing device is significantly reduced. Fuel consumption of an automobile or the like can be significantly reduced if the tapered roller bearing device is employed in the automobile.

Moreover, when the device for supplying the oil is limited only to this oil supplying unit in the tapered roller bearing device, the oil agitation loss can be reduced more significantly in the tapered roller bearing device.

In the invention, the projecting portion may include a guide surface which is brought into sliding contact with larger diameter side end faces of the tapered rollers and a tapered outer peripheral surface part in which an outer diameter thereof becomes smaller toward an axial inner direction of the inner ring.

According to the above construction, by merely supplying the oil to the outer peripheral surface part, the oil can be automatically guided to the guide surface of the large rib portion and the tapered rollers through the outer peripheral surface part. Therefore, the large rib portion of the inner ring and the larger diameter side end faces of the tapered rollers which are brought into sliding contact with each other can be effectively lubricated, so that the seizure between the guide surface and the larger diameter side end faces of the tapered rollers is reliably prevented.

According to another aspect of the invention, the above object has been achieved by a tapered roller bearing device comprising:
an inner ring having an inner ring tapered raceway surface and a large rib portion which is located on a larger diameter side of the inner ring tapered raceway surface;
an outer ring having an outer ring tapered raceway surface;
a plurality of tapered rollers disposed between the inner ring tapered raceway surface and the outer ring tapered raceway surface; and
an outer ring fixing member having an inner peripheral surface brought into contact with an outer peripheral surface of the outer ring;
wherein an oil supply passage and an oil dropping portion defined at one of openings of the oil supply passage are formed in the outer ring fixing member; and
the oil dropping portion is adjacent to a larger diameter side end face of the outer ring tapered raceway surface in a radial direction of the outer ring.

The inner peripheral surface of the outer ring fixing member may have a part which is not brought into contact with the outer peripheral surface of the outer ring along with a part which is brought into contact with the outer peripheral surface of the outer ring.

Further, by forming the oil dropping portion to be adjacent to the larger diameter side end face of the outer ring tapered raceway surface in the radial direction, the amount of oil (lubricating oil) discharged through the opening at a predetermined time period, is adjusted to be a minute amount. Accordingly, the oil can be transferred to the larger diameter side end face of the outer ring, the inner peripheral surface of the outer ring, the larger diameter side end faces of the tapered rollers, successively in this order. The oil can be efficiently supplied to the larger diameter side end faces of the tapered rollers and a sliding surface of the large rib portion of the outer ring with which the larger end face is brought into sliding contact. Therefore, the seizure between the larger diameter side end faces of the tapered rollers and the sliding surface of the large rib portion of the outer ring can be effectively prevented. Further, the oil transferred from the larger diameter side end faces of the tapered rollers can be supplied to all sliding regions between the raceway surfaces and the tapered rollers by rotation and/or revolution of the tapered rollers and rotation of the rotating ring, the seizure can be prevented entirely in the tapered roller bearing devices.

Further, according to the invention, since the seizure of the tapered roller bearing device can be prevented by very small amount of the oil as described above, the oil agitation loss of the tapered roller bearing device can be significantly reduced. The torque due to the oil agitation loss can be significantly reduced.

Further, in the tapered roller bearing device according to one embodiment, an axial position of an edge portion of the opening of the oil supply passage (the oil dropping portion) facing a smaller diameter side of the outer ring tapered raceway surface substantially coincides with an axial position of the larger diameter side end face of the outer ring.

Here, "substantially coincide" means a state that the larger diameter side end face of the outer ring is located within a axial range whose center is located at the axial position of the edge portion located on the smaller diameter side of the outer ring tapered raceway surface and whose distance is equal to or less than four times of the axial distance of the chamfered portion formed in a vicinity of the radial outer edge of the outer ring at the larger diameter end face (whose distance is equal to or less than two times of the chambered portion from the center to one end of the range).

According to the above embodiment, since the edge portion located on the smaller diameter side of the outer ring tapered raceway surface substantially coincides with the larger diameter side end face of the outer ring in the axial direction of the outer ring, no step is formed between the edge portion of the opening and the larger diameter side end face of the outer ring. Therefore, the oil supplied through the oil supply passage can be transferred to the end face of the outer ring efficiently and smoothly, and a required minimum amount of the oil for preventing the seizure between the larger diameter side end faces of the tapered rollers and the sliding surfaces of the large rib portion can be decreased.

According to the tapered roller bearing device of the invention, since one opening of the oil supply passage is adjacent to the larger diameter side end face of the outer ring tapered raceway surface in the radial direction of the outer ring, the oil discharged from the opening can be transferred to the end face of the outer ring, the inner peripheral surface of the outer ring and the larger diameter side end faces of the tapered rollers, successively in this order. Therefore, the seizure between the larger diameter side end faces of the tapered rollers and the sliding surfaces of the large rib portion of the outer ring can be prevented. Further, the oil transferred from the larger diameter side end faces of the tapered rollers can be supplied to all sliding regions between the raceway surfaces and the tapered rollers by rotation and/or revolution of the tapered rollers and rotation of the rotating ring, the seizure can be prevented entirely in the tapered roller bearing devices.

Further, according to the tapered roller bearing device of the invention, since the seizure can be prevented by a minute amount of the oil, it is possible to reduce the oil agitation loss of the tapered roller bearing device significantly.

### BRIEF DESCRIPTION OF THE DRAWINGS

Fig. 1 is a schematic sectional view of a tapered roller bearing device according to one embodiment of the invention taken along the axial direction thereof.

Fig. 2 is a schematic sectional view of a tapered roller bearing device according to the second embodiment of the invention taken along the axial direction thereof.

Fig. 3 is a schematic sectional view of a tapered roller bearing device according to the third embodiment of the invention taken along the axial direction thereof.

Fig. 4 is a schematic sectional view of a tapered roller bearing device according to the fourth embodiment of the invention taken along the axial direction thereof.

Fig. 5 is a schematic partial enlarged sectional view showing a vicinity of the end face 230 on the larger diameter side of the tapered raceway surface of the outer ring 201.

Fig. 6 shows a modified example of Fig. 5.

### DETAILED DESCRIPTION OF THE PREFERRED EMBODIMENTS

Preferred embodiments of the present invention will now be described in detail with reference to the drawings.

In the drawings, the vertical direction corresponds to the radial direction of the bearing devices shown in the figures. The upper side of the figures corresponds to the radial outer side. The lower side of the figures corresponds to the radial inner side. Further, the horizontal direction corresponds to the axial direction of the bearing devices shown in the figures. The left side of the figures corresponds to the axial outer side. The right side of the figures corresponds to the axial inner direction.

The inventors conducted multiple tests on a number of tapered roller bearing devices made of various materials and formed into various shapes, for investigating torque of the tapered roller bearing devices and occurrence of the seizure in the tapered roller bearing devices in view of various positions in the bearing devices from which the oil is supplied and in view of various kinds of the oil to be supplied. As a result, the inventors found that the seizure is caused in the sliding region between the larger diameter side end faces of the tapered rollers and the large rib portion of the inner ring in most cases. Further, the inventors also found the followings. If a sufficient amount of the oil is supplied to the sliding region between the larger diameter side end faces of the tapered roller and the large rib portion of the inner ring to prevent the seizure, the oil is supplied sufficiently in sliding regions other than such a sliding region of the raceway surfaces by rotation and/or revolution of the tapered rollers and rotation of the rotating ring, so that the seizure is not caused entirely in the tapered roller bearing device in most cases.

Further, it is found, based on comparisons among many sample tapered roller bearing devices tested, that if the oil is supplied in the tapered roller bearing device from the opening on the smaller diameter side of the tapered (or conical) raceway surface of the outer ring, relatively large amount of oil is necessary to prevent the seizure, so that the torque for these tapered roller bearing devices is relatively high. It is considered that the oil supplied from the smaller diameter side of the tapered raceway of the outer ring tends to flow in the radial outer direction within the tapered roller bearing device due to centrifugal force by rotation of the inner ring and the oil does not easily reach the sliding region between the large rib portion of the inner ring and the larger end faces of the tapered rollers which is located on the radial inner side of the inner ring.

Further, it is found, based on comparisons among many sample tapered roller bearing devices tested, that if the oil is supplied in the tapered roller bearing device from the opening on the larger diameter side of the tapered raceway surface of the outer ring, or from the opening on the larger diameter side of the tapered raceway surface of the inner ring, the seizure in the sliding region between the larger diameter side end faces of the tapered rollers and the large rib portion of the inner ring can be prevented by supplying very small amount of the oil so that the seizure is not caused entirely in the tapered roller bearing device. Moreover, in the tapered roller bearing device (except the oil supplying unit) according to embodiments of the invention, it is confirmed that the amount of oil to be supplied can be dramatically reduced up to the half of the conventional amount or less in the case in which the oil is supplied between the projecting portion and the larger diameter side end faces of the tapered rollers, as compared with the case in which the oil is supplied from the opening on the smaller diameter side of the tapered raceway surface of the inner ring in the conventional tapered roller bearing device (the bearing device in which the outer peripheral surface of the large rib portion of the inner ring is substantially in parallel with the axis of the bearing device in a section along the axial direction). Accordingly, it is confirmed that the torque can be significantly reduced.

Moreover, in the tapered roller bearing device (except the oil supplying unit) according to embodiments of the invention, it is confirmed that the amount of oil to be supplied can be dramatically reduced up to the half of the conventional amount or less in the case in which the oil is supplied from the opening on the larger diameter side of the inner ring tapered raceway surface in the tapered roller bearing device, as compared with the case in which the oil is supplied from the opening on the smaller diameter side of the tapered raceway surface of the inner ring (or smaller diameter side of the tapered raceway surface of the outer ring) in the conventional tapered roller bearing devices (the bearing device in which the outer peripheral surface of the large rib portion of the inner ring is substantially in parallel with the axis of the bearing device in a section along the axial direction). Accordingly, it is confirmed that the torque can be significantly reduced.

### (First Embodiment)

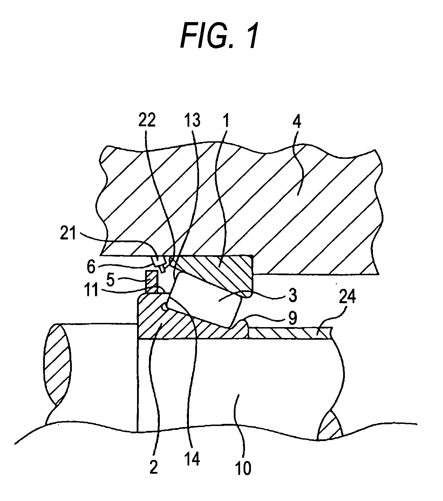

Fig. 1 is a schematic sectional view of a tapered roller bearing device according to the first embodiment of the invention taken along the axial direction thereof.

The tapered roller bearing device rotatably supports a pinion shaft 10 of a differential gear system. The tapered roller bearing device includes an outer ring 1, an inner ring 2, tapered rollers 3, a vertical wall member 5 as a projecting portion of the invention and an oil supplying unit 6.

The outer ring 1 includes a tapered (or conical) raceway surface (outer ring tapered raceway surface) on its inner peripheral side. An outer peripheral surface of the outer ring 1 is internally fitted and fixed to a housing 4 of the differential gear system.

The inner ring 2 includes a tapered (or conical) raceway surface (inner ring tapered raceway surface) on its outer peripheral side. An inner peripheral surface of the inner ring 2 is externally fitted and fixed to the pinion shaft 10 of the differential gear system. The inner ring 2 has a small end portion 9 on a smaller diameter side of the tapered raceway surface and a large rib portion 11 on a larger diameter side of the tapered raceway surface. The large rib portion 11 includes a sliding surface 14 to be brought into sliding contact with larger diameter side end faces 13 of the tapered rollers 3. The plural tapered rollers 3 are disposed at a predetermined interval along the circumferential direction while being held by a cage (not shown) between the tapered raceway surface of the outer ring 1 and the tapered raceway surface of the inner ring 2.

The vertical wall member 5 has an annular shape. An inner peripheral surface of the vertical wall member 5 is externally fitted and fixed to an outer peripheral surface of the large rib portion 11 of the inner ring 2. Interposing a gap therebetween, the vertical wall member 5 faces the larger diameter side end faces 13 of the tapered rollers 3 along the axial direction in a region on a radial outer side of the outer peripheral surface of the large rib portion 11 of the inner ring 2. In other words, the cylindrical outer peripheral surface of the large rib portion 11 is placed between the vertical wall member 5 and the larger diameter side end faces 13.

The oil supplying unit 6 is configured to supply oil between the vertical wall member 5 and the larger diameter side end faces 13 by spraying oil which has a suitable viscosity for preventing the seizure of the rolling bearing. The oil supplying unit 6 includes a spray device (not shown) which generates oil mist, an on/off valve (not shown), an oil line (not shown) and an oil supply passage (not shown) formed in the housing 4, an oil dropping portion 21 connected with the oil supply passage.

One end of the oil line is connected to an ejection port of the spray device through the on/off valve. The on/off valve introduces the oil mist into the oil line, or prohibits the introduction of the oil mist into the oil line, by switching open or close of the valve.

The other end of the oil line is connected to the oil supply passage. The oil supply passage communicates the outside and inside of the differential gear system. The oil dropping portion 21 has a nozzle 22 to be a mist condenser. An ejection port of the nozzle 22 is directed to the gap between the vertical member 5 and the larger diameter side end faces 13 of the tapered rollers 3. Incidentally, the cylindrical outer peripheral surface of the large rib portion 11 is located between the vertical member 5 and the larger diameter side end faces 13 of the tapered rollers 3. In such a construction that the projecting portion is located on an axial outer side of the axial inner edge of the outer peripheral surface of the large rib portion, the oil can be easily supplied between the projecting portion and the larger diameter side end faces of the tapered rollers.

The oil supplying unit 6 is configured so that the oil mist generated in the spray device is guided to the oil dropping portion 21 through the oil line and the oil supply passage. The oil supplying unit 6 is also configured so that the oil mist guided to the oil dropping portion 21 is condensed at the nozzle 22 of the oil dropping portion 21, and a drop of the oil is supplied from the nozzle 22 to the gap between the vertical wall member 5 and the larger diameter side end faces 13 of the tapered rollers 3.

Although it is not described in detail here, in this differential gear system, an internal partition wall of the housing, forming the internal structure of the housing, is formed into a shape to prevent infiltration of gear oil, supplied for preventing seizure of gears etc. in the differential gear system, into the inside of the tapered roller bearing device from openings on its opposite sides. In other words, this differential gear system is configured so that the gear oil in the system hardly infiltrates within the tapered roller bearing device. Accordingly, the tapered roller bearing device is supplied only with the oil from the oil supplying unit 6, substantially. Incidentally, reference numeral 24 denotes a collapsible spacer in Fig. 1. The collapsible spacer 24 imparts a preload of the inner ring 2 in the axial direction.

In the above construction, the oil supplying unit 6 is configured to supply minute amounts of oil between the vertical member 5 and the larger diameter side end faces 13 of the tapered rollers 3 at the predetermined interval (predetermined time period) by switching the on/off valve. Accordingly, by supplying the oil on the axial inner side of the vertical member 5, the supplied oil is prevented from leaking out of the bearing device from the opening on the larger diameter side of the tapered raceway surface of the inner ring 2 in the tapered roller bearing device. Therefore, the oil can sufficiently reach the sliding region between the larger diameter side end faces 13 of the tapered rollers 3 and the large rib portion 11, even if the amount of the supplied oil is very small.

According to the tapered roller bearing device of the first embodiment, the vertical wall member 5 projects from the outer peripheral surface of the large rib portion 11 in the radial outer direction and the oil is supplied between the vertical wall member 5 and the larger diameter side end faces 13 of the tapered rollers 3. The oil is prevented from leaking out of the bearing device from the opening on the larger diameter side of the tapered raceway of the inner ring 2 and is supplied efficiently to the larger diameter side end faces 13 of the tapered rollers 3 and the sliding surface 14 in the large rib portion facing the larger diameter side end faces 13. Therefore, it is possible to lubricate the large rib portion 11 and the larger diameter side end faces 13 of the tapered rollers 3 which are brought into sliding contact with each other, so that the seizure is reliably prevented between the sliding surface 14 and the larger diameter side end faces 13 to be caused due to the sliding contact between the sliding surface 14 and the larger diameter side end faces 13.

Further, according to the tapered roller bearing device of the first embodiment, the seizure of the tapered rollers 3 can be prevented by merely supplying oil between the vertical wall member 5 and the larger diameter side end faces 13. Accordingly; the amount of the oil supplied in the tapered roller bearing device can be significantly reduced as compared with conventional bearing devices. Therefore, a torque of the tapered roller bearing device is significantly reduced. Fuel consumption of an automobile or the like can be significantly reduced if the tapered roller bearing device is employed therein.

Further, according to the tapered roller bearing device of the first embodiment, since the oil supplying unit 6 is provided to supply the oil between the vertical member 5 and the larger diameter side end faces 13 of the tapered rollers 3, the oil can be supplied between the vertical member 5 and the larger diameter side end faces 13 of the tapered rollers 3. Therefore, the seizure between the sliding surface 14 of the large rib portion 11 and the larger diameter side end faces 13 of the tapered rollers 3 can be reliably prevented. Moreover, according to the tapered roller bearing device of the first embodiment, the oil is supplied only from the oil supplying unit 6 substantially. The oil agitation loss in the tapered roller bearing device can be reduced significantly.

Incidentally, although the vertical wall member 5 and the inner ring 2 are provided separately in the first embodiment, the projecting portion and the inner ring may be provided integrally (namely, the projecting portion is formed as a part of the inner ring) in the invention. Further, although the vertical wall member 5 constituting the projecting portion is formed in the annular shape in the first embodiment, the projecting portion may be formed in a shape other than the annular shape as long as it is in a shape to suppress efficiently the oil leakage to the outside of the bearing device in the invention.

Although the shape of the outer peripheral surface of the large rib portion 11 located between the vertical member 5 and the larger diameter side end faces 13 of the tapered rollers 3 is the cylindrical shape, the shape may be a tapered shape (a conical shape, for example) where the outer diameter becomes smaller toward the axial inner side of the inner ring in the invention. In this case, the oil dropped onto the tapered peripheral surface can be smoothly guided by means of the tapered peripheral surface up to the sliding surface of the large rib portion facing the tapered rollers. Therefore, the seizure between the large rib portion and the tapered rollers can be reliably prevented.

In other words, the seizure between the large rib portion and the tapered rollers can be reliably prevented because of synergetic effect by the projecting portion projecting toward the radial outer direction from the outer peripheral surface of the large rib portion, and the shape of the outer peripheral surface in which the outer diameter thereof becomes smaller toward the axial inner direction in the large rib portion of the inner ring.

Further, in the tapered roller bearing device according to the first embodiment, although the oil supplying unit 6 is configured to supply minute amounts of oil between the vertical member 5 and the larger diameter side end faces 13 of the tapered rollers 3 at the predetermined interval (predetermined time period), the oil supplying unit may be configured to supply continuously minute amounts of oil between the projecting portion and the larger diameter side end faces of the tapered rollers in the invention. Furthermore, in this invention, the oil supplying unit may be configured to receive a signal indicative of temperature from a temperature sensor that measures temperature of the tapered roller bearing device, or surrounding temperature of the tapered roller bearing device. The minute amount of the oil may be supplied between the projecting portion and the larger diameter side end faces of the tapered rollers only when the signal indicating a predetermined temperature or more is received from the temperature sensor.

Further, in the tapered roller bearing device according to the first embodiment, most of the oil supplied within the tapered roller bearing device is supplied from the oil supplying unit 6. More specifically, most of the oil supplied within the tapered roller bearing device is supplied from the opening on the larger diameter side of the tapered raceway surface of the inner ring. However, the oil may be supplied from the opening on the smaller diameter side of the tapered raceway surface of the inner ring in addition to the opening on the larger diameter side of the tapered raceway surface of the inner ring in the invention.

Further, in the tapered roller bearing device according to the first embodiment, the oil supplying unit 6 supplies the oil by spraying (mist lubrication) between the vertical wall member 5 and the larger diameter side end faces 13 of the tapered rollers 3. However, in the invention, the oil supplying unit may include a reciprocating pump driven by compressed air for discharging a minute mount of fluid, a mixing valve for mixing the minute amount of the oil and the compressed air, an oil-air pipe for guiding the minute amount of the oil and the compressed air after mixing, and a nozzle for ejecting the minute amount of the oil and the compressed air after mixing, so that the oil supplying unit supplies oil and air at the same time (oil-air lubrication or air-oil lubrication). Moreover, the oil supplying unit may be configured without the nozzle, such that the oil is directly dropped from an opening at one end of the oil passage formed in the outer ring fixing member to which the outer ring is fixed. Moreover, the oil supplying unit may be configured such that oil drops is freely fallen from an oil reservoir to be supplied between the projecting portion and the larger diameter side end faces of the tapered rollers. The oil supplying unit may be formed with any structure so long as the unit can supply the oil between the projecting portion and the larger diameter end faces of the tapered rollers. In such a case, it is preferable that the oil is supplied at a rate of several milliliters per minute.

Further, in the tapered roller bearing device according to the first embodiment, although the oil supplying unit 6 is configured to supply the oil between the vertical wall member 5 and the larger diameter side end faces 13 of the tapered 3, the oil supplying unit may eject oil drops or spray oil mist by a nozzle toward an upper face on the radial outer side of the projecting portion in the invention.

Further, in the tapered roller bearing device according to the first embodiment, although the oil is supplied by the oil supplying unit 6, the oil supplying unit may be omitted in the invention. In a case that the tapered roller bearing device is mounted onto a pinion shaft of a vehicle pinion shaft supporting system, even if such an oil supplying unit is not provided, by forming the internal partition wall of the housing as the internal structure of the housing in a suitable shape, the gear oil for preventing seizure in gears within the vehicle pinion shaft supporting system (differential gear system, for example) can be supplied between the projecting portion and the larger diameter side end faces of the tapered rollers.

### (Second Embodiment)

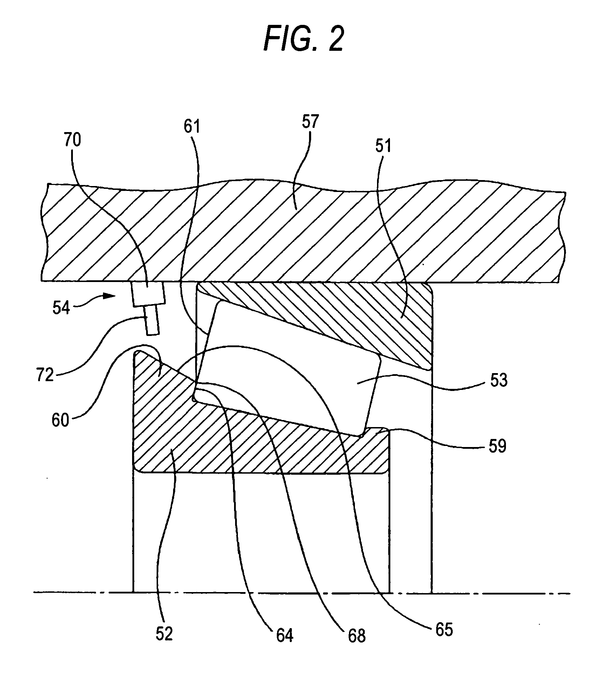

Fig. 2 is a schematic sectional view of a tapered roller bearing device according to the second embodiment of the invention taken along the axial direction thereof.

The tapered roller bearing device according to the second embodiment rotatably supports a pinion shaft (not shown) of a differential gear system. The tapered roller bearing device includes an outer ring 51, an inner ring 52, tapered rollers 53 and an oil supplying unit 54.

The outer ring 51 includes a tapered (or conical) raceway surface (outer ring tapered raceway surface) on its inner peripheral side. An outer peripheral surface of the outer ring 51 is internally fitted and fixed to a housing 57 of the differential gear system. On the other hand, the inner ring 52 includes a tapered (or conical) raceway surface (inner ring tapered raceway surface) on its outer peripheral side. An inner peripheral surface of the inner ring 52 is externally fitted and fixed to the pinion shaft (not shown) of the differential gear system. The inner ring 52 has a small end portion 59 on a smaller diameter side of the tapered raceway surface and a large rib portion 60 on a larger diameter side of the tapered raceway surface. The large rib portion 60 forms a projecting portion of the invention and includes a guide surface 64 and an outer peripheral tapered surface 65 as a tapered (or conical) outer peripheral surface part. The guide surface 64 is brought into sliding contact with larger diameter side end faces 61 of the tapered rollers 53 to guide. The outer peripheral tapered surface 65 is formed such that its outer diameter becomes smaller toward the axial inner direction of the inner ring 52, extending from an axial end of the inner ring 52 (except chambered portion) to a radial outer end 68 of the guide surface 64. The plural tapered rollers 53 are disposed at a predetermined interval along the circumferential direction while being held by a case (not shown) between the tapered raceway surface of the outer ring 51 and the tapered raceway surface of the inner ring 52.

The oil supplying unit 54 is configured to supply oil having a suitable viscosity for preventing the seizure of the rolling bearing to the outer peripheral tapered surface 65 by spraying the oil. The oil supplying unit 54 includes a spray device (not shown) which generates oil mist, an on/off valve (not shown), an oil line (not shown) and an oil supply passage (not shown) formed in the housing 57, an oil dropping portion 70 connected with the oil supply passage.

One end of the oil line is connected to an ejection port of the spray device through the on/off valve. The on/off valve introduces the oil mist into the oil line, or prohibits the introduction of the oil mist into the oil line, by switching open or close of the valve.

The other end of the oil line is connected to the oil supply passage. The oil supply passage communicates the outside and inside of the differential gear system. The oil dropping portion 70 has a nozzle 72 to be a mist condenser. An ejection port of the nozzle 72 is directed to the outer peripheral tapered surface 65.

The oil supplying unit 54 is configured so that the oil mist generated in the spray device is guided to the oil dropping portion 70 through the oil line and the oil supply passage. The oil supplying unit 54 is also configured so that the oil mist guided to the oil dropping portion 71 is condensed at the nozzle 72 of the oil dropping portion 70, and a drop of the oil is supplied from the nozzle 72 to the outer peripheral tapered surface 65. Further, the oil supplying unit 54 is configured to supply minute amounts of oil on the outer peripheral tapered surface 65 at the predetermined interval (predetermined time period) by switching the on/off valve.

Although it is not described in detail here, in this differential gear system, an internal partition wall of the housing, forming the internal structure of the housing, is formed into a shape to prevent infiltration of gear oil, supplied for preventing seizure of gears etc. in the differential gear system, into the inside of the tapered roller bearing device from openings on its opposite sides. In other words, this differential gear system is configured so that the gear oil in the system hardly infiltrates within the tapered roller bearing device. Accordingly, the tapered roller bearing device is supplied only with the oil from the oil supplying unit 54, substantially.

In the above construction, the outer peripheral tapered surface 65 is formed such that its outer diameter becomes smaller toward the axial inner direction of the inner ring 52. Accordingly, when the oil is supplied to the outer peripheral tapered surface 65 from the oil supplying unit 54, the oil supplied to the outer peripheral tapered surface 65 moves on the outer peripheral tapered surface 65 toward the axial inner direction up to the guide surface 64 of the large rib portion 60. Namely, the outer peripheral tapered surface 65 as the tapered outer peripheral surface part has functions to guide and introduce oil to the larger diameter side end faces 61 of the tapered rollers 53 and the guide surface 64 of the large rib portion 60, unlike a tapered surface formed by chamfering process.

Incidentally, when the tapered outer peripheral surface part (which may not be formed over the entire (except the chamfered portion) of the outer peripheral surface of the large rib portion as described in the second embodiment) is formed in a tapered surface shape, it is preferable to set an inclined angle which is defined (as an angle less than 90 degrees) between the surface of the tapered outer peripheral surface part and the axis of the tapered roller bearing device in a section taken along the axial direction, to be 10 degrees or more, in that the oil supplied to the outer tapered surface is smoothly guided to the guide surface of the large rib portion.

According to the tapered roller bearing device of the second embodiment, since the large rib portion 60 includes the outer peripheral tapered surface 65, in which the outer diameter becomes smaller toward the axial inner direction of the inner ring 52, the oil can be automatically and smoothly guided up to the guide surface 64 on the outer peripheral tapered surface 65. Therefore, it is possible to effectively lubricate the large rib portion 60 of the inner ring 52 and the larger diameter side end faces 61 of the tapered rollers 53 which are brought into sliding contact with each other, so that the seizure is reliably prevented between the guide surface 64 and the larger diameter side end faces 61 of the tapered rollers 53. As a result, the seizure to be caused entirely in the tapered roller bearing device can be reliably prevented.

Further, according to the taped roller bearing device of the second embodiment, since the oil is supplied between the large end surfaces 61 of the tapered rollers 53 and the large rib portion 60 from the outer peripheral tapered surface 65, the heat on the outer peripheral tapered surface 65 can be absorbed by the oil. Therefore, the heat radiation property of the large rib portion 60 is improved very much. As a result, the seizure between the guide surface 64 and the larger diameter side end faces 61 of the tapered rollers 53 can be prevented further reliably.

Further, according to the tapered roller bearing device of the second embodiment, since the oil is supplied only to the outer peripheral tapered surface 65, the amount of the oil in the tapered roller bearing device can be limited to a minute amount. Therefore, a torque of the tapered roller bearing device is significantly reduced. Fuel consumption of an automobile or the like can be significantly reduced if the tapered roller bearing device is employed therein.

Further, according to the tapered roller bearing device of the second embodiment, since the oil supplying unit 54 is provided to supply the oil to the outer peripheral tapered surface 65, the oil can be supplied to the outer peripheral tapered surface 65. Therefore, the seizure between the guide surface 64 and the larger diameter side end faces 61 of the tapered rollers 53 can be reliably prevented.

Further, according to the tapered roller bearing device of the second embodiment, since the oil is supplied only from the oil supplying unit 54, the oil agitation loss in the tapered roller bearing device can be reduced significantly. Therefore, the torque of the tapered roller bearing device is significantly reduced.

Although the outer peripheral tapered surface 65 is extended from the axial end of the inner ring 52 (except the chamfered portion), to the radial outer end 68 of the guide surface 64 in the second embodiment, the outer peripheral tapered surface may not be formed from the axial end of the inner ring 52 (except the chamfered portion), as long as it is extended to the radial outer end of the guide surface of the large rib portion in the invention. In other words, the tapered outer peripheral surface part in which the outer diameter becomes smaller toward the axial inner direction of the inner ring may not be formed over the entire of the outer peripheral surface of the large rib portion in the invention, and it is sufficient if the tapered outer peripheral surface part is formed partially on the axial inner side of the outer peripheral surface of the large rib portion.

Further, although the tapered outer peripheral surface part, in which the outer diameter becomes smaller toward the axial inner direction of the inner ring is formed into a tapered shape in the second embodiment, the tapered outer peripheral surface part may be formed into any shape as long as it is a tapered shape in which the outer diameter becomes smaller toward the axial inner direction of the inner ring in the invention. For example, the shape of the tapered outer peripheral surface part may be formed by various curves in a section taken along the axial direction, such as a partially parabolic shape bulging toward the radial outer direction, a partially circular shape, partially hyperbolic shape or any combination of these curves. Alternatively, the shape may be formed by combination of such curved surfaces and tapered surfaces.

Further, in the tapered roller bearing device according to the second embodiment, although the oil supplying unit 54 is configured to supply minute amounts of oil to the outer peripheral tapered surface 65 at the predetermined interval (predetermined time period), the oil supplying unit may be configured to supply continuously minute amounts of oil to the tapered outer peripheral surface part in the invention. Furthermore, in this invention, the oil supplying unit may be configured to receive a signal indicative of temperature from a temperature sensor that measures temperature of the tapered roller bearing device, or surrounding temperature of the tapered roller bearing device. The oil may be supplied to the tapered outer peripheral surface part only when the signal indicating a predetermined temperature or more is received from the temperature sensor.

Further, in the tapered roller bearing device according to the second embodiment, the oil supplying unit 54 supplies the oil by spraying (mist lubrication) to the outer peripheral tapered surface 65. However, in the invention, the oil supplying unit may include a reciprocating pump driven by compressed air for discharging a minute mount of fluid, a mixing valve for mixing the minute amount of the oil and the compressed air, an oil-air pipe for guiding the minute amount of the oil and the compressed air after mixing, and a nozzle for ejecting the minute amount of the oil and the compressed air after mixing, so that the oil supplying unit supplies oil and air at the same time (oil-air lubrication or air-oil lubrication). Moreover, the oil supplying unit may be configured without the nozzle, such that the oil is directly dropped from an opening at one end of the oil passage formed in the outer ring fixing member to which the outer ring is fixed. Moreover, the oil supplying unit may be configured such that oil drops is freely fallen from an oil reservoir to be supplied to the tapered outer peripheral surface part. The oil supplying unit may be formed with any structure so long as the unit can supply the oil to the tapered outer peripheral surface part. In such a case, it is preferable that the oil is supplied at a rate of several milliliters per minute.

Further, in the tapered roller bearing device according to the second embodiment, the oil is supplied only to the outer peripheral tapered surface 65 of the large rib portion 60. In the invention, the oil may be supplied to parts other than the tapered outer peripheral surface part of the large rib portion as well as the tapered outer peripheral surface part of the large rib portion.

Further, in the tapered roller bearing device according to the second embodiment, the oil supplying unit 54 is provided. However, in the invention, the oil supplying unit may not be provided in the tapered roller bearing device. This is because, for example, in a case that the tapered roller bearing device is mounted in a pinion shaft supporting system in a vehicle, the gear oil in the vehicle pinion shaft supporting system (for example, the differential gear system) may be supplied to the tapered outer peripheral surface part of the large rib portion in the tapered roller bearing device, by forming an internal partition wall of the housing as the internal structure of the housing into a suitable structure in the vehicle pinion shaft supporting system.

### (Third Embodiment)

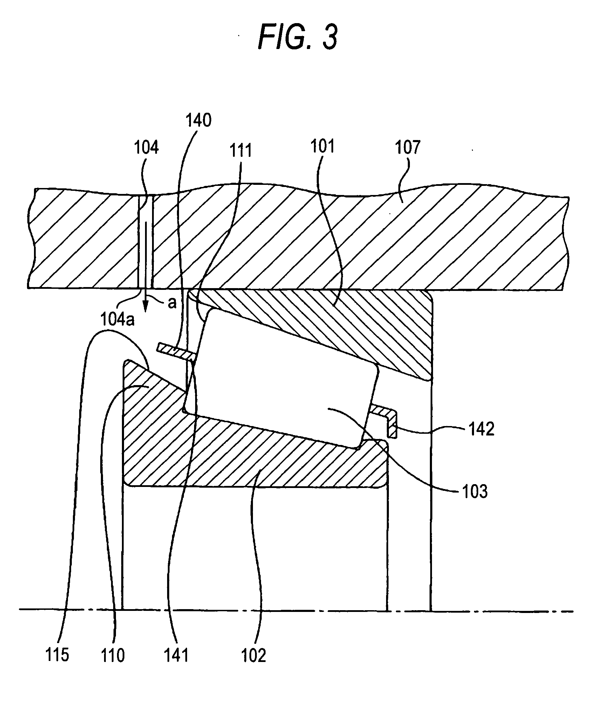

Fig. 3 is a schematic sectional view of a tapered roller bearing device according to third embodiment of the invention taken along the axial direction thereof.

In Fig. 3, the reference numeral 140 denotes a cage. The cage 140 includes a tapered (conical) main body portion 141 and a radial extended portion 142. The main body portion 141 has pockets for accommodating tapered rollers 103. The radial extended portion 142 is continuous to a smaller diameter side of the main body portion 141 and is bent radially inwardly so as to extend toward the radial inner direction.

The tapered roller bearing device has a structure to drop the oil in the radial inner direction of an outer ring 101 directly from an oil dropping portion 104a, which is defined at one of the openings of an oil supply passage 104 formed in a housing 107 as an outer ring fixing member to which the outer ring 101 is fixed onto an outer peripheral tapered surface 115 of a large rib portion 110 of an inner ring 102 as indicated with the arrow a.

By such a structure, the oil splashed from the large rib portion adheres to the outer peripheral tapered surface (the outer diameter surface of the large rib portion) 115 and then the oil will be supplied to larger diameter side end faces 111 of the tapered rollers 103 though the outer peripheral tapered surface 115.

In the above structure, the housing 107 may be a housing which defines an internal space of a system in which the tapered roller bearing device is mounted like a case which defines an internal space of a pinion shaft supporting system in a vehicle (for example, a differential gear system). In such a case, the oil supply passage 104 may be configured to communicate the outside and the inside of the system in which the bearing device is mounted, so that the oil is supplied to the bearing device from the outside of the system in which the bearing device is mounted. Further, the housing 107 may be a partition wall located in the internal space of the vehicle pinion shaft supporting system. In such a case, needless to say, the gear oil within the vehicle pinion shaft supporting system may be supplied to the outer peripheral tapered surface 115.

### (Fourth Embodiment)

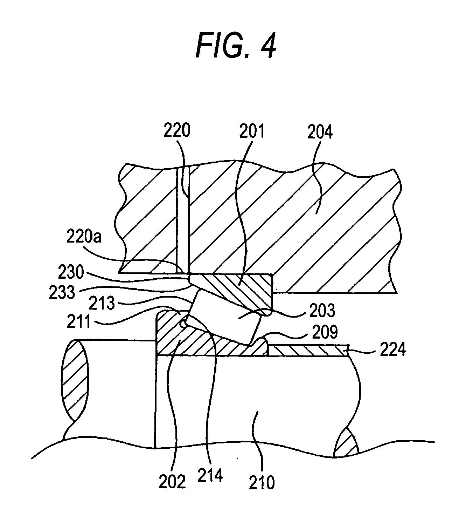

Fig. 4 is a schematic sectional view of a tapered roller bearing device according to the fourth embodiment of the invention taken along the axial direction thereof.

The tapered roller bearing device of the fourth embodiment rotatably supports a pinion shaft 210 of a differential gear system. The tapered roller bearing device includes an outer ring 201, an inner ring 202, tapered rollers 203, a housing (case) 204 of the differential gear system as an outer ring fixing member of the invention.

The outer ring 201 includes a tapered raceway surface (outer ring tapered raceway surface) on its inner peripheral side. An outer peripheral surface of the outer ring 201 is internally fitted and fixed to the housing 204 of the differential gear system. In other words, the housing 204 includes an inner peripheral surface which is brought into contact with the outer peripheral surface of the outer ring 201.

The inner ring 202 includes a tapered raceway surface (inner ring tapered raceway surface) on its outer peripheral side. An inner peripheral surface of the inner ring 202 is externally fitted and fixed to the pinion shaft 210 of the differential gear system. The inner ring 202 has a small end portion 209 on a smaller diameter side of the tapered raceway surface and a large rib portion 211 on a larger diameter side of the tapered raceway surface. The large rib portion 211 includes a sliding surface 214 to be brought into sliding contact with larger diameter side end faces 213 of the tapered rollers 203. The plural tapered rollers 203 are disposed at a predetermined interval along the circumferential direction while being held by a cage (not shown) between the tapered raceway surface of the outer ring 201 and the tapered raceway surface of the inner ring 202.

The housing 204 includes an oil supply passage 220. The oil supply passage 220 penetrates the housing 204 in the radial direction of the housing 204, forming openings. The oil supply passage 220 communicates between the outside and inside of the differential gear system. One of the openings of the oil supply passage 220 formed inside of the differential gear system is adjacent to an end face 230 on the larger diameter side of the tapered raceway surface of the outer ring 201 in the radial direction of the outer ring 201. The oil supply passage 220 constitutes a part of the oil supplying unit.

The oil supplying unit is constituted by an oil storage tank (not shown), a pump (not shown), an vn/off valve (not shown), an oil line (not shown) and the oil supply passage 220 etc. The oil storage tank is connected with the oil line through the on/off valve. The oil line is connected with the oil supply passage 220. The oil supplying unit includes an oil dropping portion 220a defined at one of the openings of the oil supply passage 220 and discharges oil having a suitable viscosity for preventing the seizure of the rolling bearing from the oil dropping portion 220a. The structure with which the oil supply passage is connected may be any structure as long as it can supply the oil to the oil supply passage.

Although it is not described in detail here, the housing 204 of this differential gear system is formed into a shape to prevent infiltration of gear oil, supplied for preventing seizure of gears etc. in the differential gear system, into the inside of the tapered roller bearing device from openings on its opposite sides. In other words, this differential gear system is configured so that the gear oil in the system hardly infiltrates within the tapered roller bearing device. Accordingly, the tapered roller bearing device is supplied with the oil mostly from the oil dropping portion 220a . Incidentally, reference numeral 224 denotes a collapsible spacer in Fig. 4. The collapsible spacer 224 imparts a preload of the inner ring 202 in the axial direction.

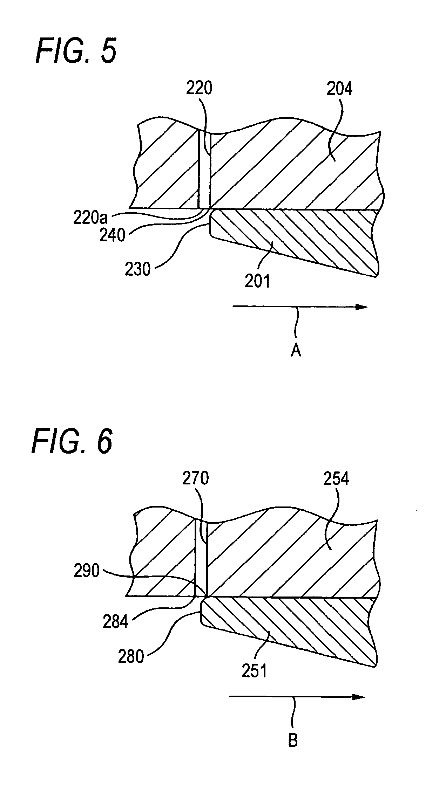

Fig. 5 is a schematic partial enlarged sectional view showing a vicinity of the end face 230 on the larger diameter side of the tapered raceway surface of the outer ring 201. As shown in Fig. 5, an edge portion 240 facing (located on a side towards) a smaller diameter side of the tapered raceway surface of the outer ring 201 (namely, one of the sides in the axial direction of the outer ring 201 indicated with the arrow A in Fig. 5) at the opening and the end face 230 on the larger diameter side of the outer ring 201 coincide with each other in the axial direction.

According to the above construction, the oil supplying unit discharges minute amounts of oil at a predetermined interval (predetermined time period) from the oil dropping portion 220a. In other words, the minute amounts of the oil is supplied to the end face 230 of the larger diameter side of the outer ring 201 from the oil dropping portion 220a at the predetermined interval. Since the amount of the oil supplied is very small, the oil supplied from the oil dropping portion 220a to the end face 230 of the larger diameter side of the outer ring 201 are reached at the larger diameter side end faces 213 of the tapered rollers 203, being transferred through the end face 230 of the larger diameter side of the outer ring 1 and a large diameter portion 233 (See Fig. 4) on the tapered raceway surfaces of the outer ring 201. Further, at circumferential positions on which the tapered rollers 203 are not located, the oil transferred through the end face 230 of the larger diameter side of the outer ring 201 and the large diameter portion 233 on the tapered raceway surface of the outer ring 201 is reached at a small diameter portion of the tapered raceway surface of the outer ring 201. Thus, the oil discharged from the oil dropping portion 220a is distributed to the larger diameter side end faces 213 of the tapered rollers 203, the sliding surface 214 of the large rib portion 211 of the outer ring 201 which is brought into sliding contact with the larger diameter side end faces 213 and the tapered raceway surface of the outer ring 201, so that the seizure of the tapered roller bearing device can be prevented.

According to the tapered roller bearing device of the fourth embodiment, since the oil dropping portion 220a is adjacent to the end face 230 of the larger diameter side of the tapered raceway surface of the outer ring 201 in the radial direction (namely, the end face is disposed immediately below the opening), the minute amount of the oil discharged from the oil dropping portion 220a can be transferred smoothly to the end face 230 of the outer ring 201, the large diameter portion 233 on the inner peripheral surface of the outer ring 201 and the larger diameter side end faces 213 of the tapered rollers 203 successively in this order. Therefore, the larger diameter side end faces 213 of the tapered rollers 203 and the sliding surface 214 of the large rib portion 211 of the inner ring 202 which is brought into sliding contact with the larger diameter side end faces 213 are can be efficiently lubricated with the minute amount of the oil. Accordingly, the seizure between the larger diameter side end faces 213 of the tapered rollers 203 and the sliding surface 214 of the large rib portion 211 of the inner ring 202 can be prevented. Further, since the oil can be supplied to all of the sliding regions among the bearing rings 201,202 and the tapered rollers 203 by rotation and revolution of the tapered rollers 203, and rotation of the inner ring 202 as the rotating ring, the seizure can be prevented entirely in the tapered roller bearing device.

Further, according to the tapered roller bearing device of the fourth embodiment, the seizure in the tapered roller bearing device can be prevented by a minute amount of the oil as described above, the oil agitation loss in the tapered roller bearing device can be reduced significantly, the torque due to the oil agitation loss can be significantly decreased.

Incidentally, in the tapered roller bearing device according to the fourth embodiment, the axial position of the edge portion 240 of the opening located on the smaller diameter side at the most of the tapered raceway surface of the outer ring 201 and the axial portion of the end face 230 of the larger diameter side of the outer ring 201 coincide with each other in the axial direction of the outer ring 201 as shown in Fig. 5. However, in the invention, as shown in Fig. 6, which corresponds to Fig. 5 as modified example, the advantage of the invention can be obtained as long as one opening 284 (oil dropping portion) of the oil supply passage 270 formed in the housing 254 is adjacent to the end face 280 of the larger diameter side of the tapered raceway surface of the outer ring 251 in the radial direction of the outer ring 251. The edge portion 290 located on the smaller diameter side at the most of the tapered raceway surface of the outer ring 251 (one side of the axial direction as indicated with the arrow B in Fig. 6) and the end face 280 of the larger diameter side of the outer ring 251 may not coincide with each other in the axial direction. Even in such a case, the oil discharged from the opening 284 at a minute amount can be transferred to the end face 280 of the outer ring 251, the large diameter portion on the inner peripheral surface 251 and the larger diameter side end faces of the tapered rollers, so that the larger diameter side end faces of the tapered rollers and the sliding surface of the large rib portion of the inner ring which is brought into sliding contact with the larger diameter side end faces can be lubricated with a minute amount of the oil.

Further, in the tapered roller bearing device according to the fourth embodiment, the outer peripheral surface of the large rib portion in the inner ring is formed in a cylindrical surface. However, in the invention, the outer peripheral surface part may be formed in any peripheral surface shape (a conical surface, for example) in which the outer diameter becomes smaller toward the axial inner direction of the inner ring. (Incidentally, the outer peripheral surface part has to be connected smoothly to the sliding surface on the large rib portion which is brought into sliding contact with the tapered rollers.)

By such a construction, even if a part of the oil transferred to the end face of the larger diameter side of the tapered raceway surface of the outer ring drops without being further transferred to the tapered raceway surface of the outer ring, the dropped oil can be guided to the sliding surface facing the tapered rollers on the large rib portion of the inner ring though the outer peripheral surface part. Therefore, the seizure in the large rib portion and the tapered rollers can be reliably prevented.

In other words, the seizure between the large rib portion and the tapered rollers can be prevented further reliably by means of the claimed positional relationship between the opening of the oil supply passage and the end face of the larger diameter side of the tapered raceway surface of the outer ring, and the claimed outer shape of the large rib portion of the inner ring in which its outer diameter becomes smaller toward the axial inner direction of the inner ring.

Further, in the tapered roller bearing device according to the above embodiment, a minute amount of the oil is discharged from the oil dropping portion 220a of the oil supplying unit at the predetermined interval. However, in the invention, the minute amount of the oil may be discharged continuously from the oil dropping portion. In such a case, it is preferable that the oil is supplied at a rate of several milliliters per minute. Furthermore, in this invention, the oil supplying unit may be configured to receive a signal indicative of temperature from a temperature sensor that measures temperature of the tapered roller bearing device, or surrounding temperature of the tapered roller bearing device. The minute amount of the oil may be discharged from the oil dropping portion only when the signal indicating a predetermined temperature or more is received from the temperature sensor.

Further, in the tapered roller bearing device according to the above embodiment, most of the oil supplied into the tapered roller bearing device is supplied from the oil dropping portion 220a. However, in the invention, the oil may be supplied from any location other than the oil dropping portion.

Further, in the tapered roller bearing device according to the above embodiment, the oil is supplied from outside of the differential gear system. However, in the invention, the oil may not be supplied from the outside of the differential gear system. For example, in a case that the tapered roller bearing device is mounted onto a pinion shaft of a vehicle pinion shaft supporting system, even if such an oil supplying unit is not provided, by forming the internal partition wall of the housing as the internal structure of the housing in a suitable shape, the gear oil within the vehicle pinion shaft supporting system (differential gear system, for example) can be supplied to the other of the openings of the oil supply passage that is located on the opposite side of the tapered roller bearings. Namely, the oil can be supplied to the tapered roller bearing device internally within the system.

## Claims

1. A tapered roller bearing device comprising:
an inner ring having an inner ring tapered raceway surface and a large rib portion which is located on a larger diameter side of the inner ring tapered raceway surface;
an outer ring having an outer ring tapered raceway surface;
a plurality of tapered rollers disposed between the inner ring tapered raceway surface and the outer ring tapered raceway surface; and
a projecting portion formed on an outer peripheral surface of the large rib portion so as to project in a radial outer direction of the inner ring.

2. The tapered roller bearing device according to claim 1, wherein the projecting portion is formed integrally with the inner ring.

3. The tapered roller bearing device according to claim 2, wherein the projecting portion includes a guide surface which is brought into sliding contact with larger diameter side end faces of the tapered rollers and a tapered outer peripheral surface part in which an outer diameter thereof becomes smaller toward an axial inner direction of the inner ring.

4. The tapered roller bearing device according to claim 1, wherein the projecting portion is formed separately from the inner ring.

5. The tapered roller bearing device according to claim 4, wherein the projecting portion is constituted by a vertical wall member which is externally fitted and fixed to an outer peripheral surface of the large rib portion of the inner ring.

6. The tapered roller bearing device according to claim 1, further comprising an oil supplying unit for supplying oil to the projecting portion and larger diameter side end faces of the tapered rollers.

7. The tapered roller bearing device according to claim 6, wherein the oil supplying unit includes an oil dropping portion which supplies the oil to a surface of the projecting portion.

8. The tapered roller bearing device according to claim 6, wherein the oil supplying unit includes an oil dropping portion connected with an oil supply passage and a nozzle having an ejection port which is directed to a space formed between the projecting portion and the larger diameter side end faces of the tapered rollers.

9. The tapered roller bearing device according to claim 1, further comprising an outer ring fixing member having an inner peripheral surface brought into contact with an outer peripheral surface of the outer ring,
wherein an oil supply passage and an oil dropping portion defined at one of openings of the oil supply passage are formed in the outer ring; and
the oil dropping portion is adjacent to a larger diameter side end face of the outer ring tapered raceway surface in a radial direction of the outer ring.

10. The tapered roller bearing device according to claim 9, wherein an axial position of an edge portion of the oil dropping portion facing a smaller diameter side of the outer ring tapered raceway surface substantially coincides with an axial position of the larger diameter side end face of the outer ring.

11. A tapered roller bearing device comprising:
an inner ring having an inner ring tapered raceway surface and a large rib portion which is located on a larger diameter side of the inner ring tapered raceway surface;
an outer ring having an outer ring tapered raceway surface;
a plurality of tapered rollers disposed between the inner ring tapered raceway surface and the outer ring tapered raceway surface; and
an outer ring fixing member having an inner peripheral surface brought into contact with an outer peripheral surface of the outer ring;
wherein an oil supply passage and an oil dropping portion defined at one of openings of the oil supply passage are formed in the outer ring; and
the oil dropping portion is adjacent to a larger diameter side end face of the outer ring tapered raceway surface in a radial direction of the outer ring.

12. The tapered roller bearing device according to claim 11, wherein an axial position of an edge portion of the oil dropping portion facing a smaller diameter side of the outer ring tapered raceway surface substantially coincides with an axial position of the larger diameter side end face of the outer ring.
